# EUROPÄISCHE PATENTSCHRIFT

(11) **EP 3 494 297 B1**
(45) Veröffentlichungstag und Bekanntmachung des Hinweises auf die Patenterteilung: **18.11.2020**
(21) Anmeldenummer: 17746486.4
(22) Anmeldetag: 02.08.2017
(51) Int. Cl.: F01N 9/00, F01N 3/023

(54) **VERFAHREN ZUR REGENERATION EINES PARTIKELFILTERS**
METHOD FOR REGENERATION OF A PARTICLE FILTER
PROCÉDÉ DE RÉGÉNÉRATION D'UN FILTRE À PARTICULES

(30) Priorität: 04.08.2016 DE 102016114427
(43) Veröffentlichungstag der Anmeldung: 12.06.2019
(73) Patentinhaber: Volkswagen Aktiengesellschaft, 38440 Wolfsburg (DE)
(72) Erfinder: ZINK, Florian, 74906 Bad Rappenau (DE)
(74) Vertreter: Rössler, Matthias
(86) Internationale Anmeldenummer: PCT/EP2017/069518
(87) Internationale Veröffentlichungsnummer: WO 2018/024768

(56) Entgegenhaltungen:
- EP-A1- 1 873 369
- DE-A1- 19 945 372
- DE-A1-102004 000 065
- DE-A1-102005 011 419

## Beschreibung

Die Erfindung betrifft ein Verfahren zur Regeneration eines Partikelfilters, der insbesondere in einer Abgasanlage einer Verbrennungskraftmaschine angeordnet ist.

Partikelfilter werden in Abgasanlagen von Verbrennungskraftmaschinen eingesetzt. Partikelfilter sollen Partikel aus dem Abgasstrom entfernen und sie zumindest temporär zurückhalten. Insbesondere werden Partikelfilter wiederholt gereinigt, z. B. durch ein Abbrennen der im Partikelfilter gespeicherten bzw. abgelagerten Partikel (z. B. Ruß).

Diese so genannte Regeneration erfolgt durch eine Erhöhung der Abgastemperatur und/oder durch eine Erhöhung der Sauerstoffkonzentration im Abgas stromaufwärts des Partikelfilters. Dabei ist jedoch der Temperaturverlauf während der Regeneration zu überwachen, da sonst der Partikelfilter geschädigt werden kann.

Ein Verfahren zur Regeneration ist z. B. aus der DE 10 2004 000 065 A1 bekannt. Es wird dort vorgeschlagen, den Regenerationsprozess zu modellieren, wobei Temperatur, Temperaturgradient, Partikelmenge und Verbrennungsrate innerhalb des Partikelfilters in der Modellierung berücksichtigt werden. Durch die Modellierung sollen Sauerstoffkonzentration, Massenfluss und Temperatur des Abgases kontrolliert und geregelt werden, so dass eine (lokale) Verbrennungsrate der Partikel steuerbar ist. Die Über- bzw. Unterschreitung einer Temperatur oder eines Temperaturgradienten innerhalb des Partikelfilters soll so verhindert werden.

Die bekannten Verfahren zur Regeneration erfordern einen hohen apparativen Aufbau des Abgassystems und/oder führen in Abhängigkeit von den aktuellen Bedingungen im Abgassystem nur unzureichend zur Regeneration bzw. zu einem erhöhten Kraftstoffverbrauch.

**Die** DE 199 45 372 A1 betrifft ein Verfahren zur Steuerung einer Regeneration eines Partikelfilters, wobei über ein Kennfeld oder ein Modell mehrere Parameter überwacht werden, die eine Aussage über die zunehmende Beladung des Partikelfilters ermöglichen. Die Parameter werden in einer Zustandskennzahl zusammengeführt. Überschreitet diese Zustandskennzahl einen Grenzwert, wird eine Regeneration eingeleitet.

Aufgabe der vorliegenden Erfindung ist es, die mit Bezug auf den Stand der Technik geschilderten Probleme zumindest zu lindern. Insbesondere soll ein weiteres Verfahren zur Regeneration eines Partikelfilters vorgeschlagen werden, durch das der Erfolg einer Regenerationsmaßnahme überprüft werden kann. Weiter soll eine Überhitzung des Partikelfilters wirksam verhindert werden. Das Verfahren soll mit geringem apparativem Aufwand durchführbar sein.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zur Regeneration eines Partikelfilters in einer Abgasanlage einer Verbrennungskraftmaschine vorgeschlagen, umfassend zumindest die folgenden Schritte:
a) Durchführen einer ersten Regeneration des Partikelfilters bis zum Erreichen eines (vorbestimmten) unteren Grenzwertes einer Partikelbeladung des Partikelfilters;
b) Durchführen einer Verifikationsmessung, wobei die Verbrennungskraftmaschine in einem (vorgegebenen) ersten Betriebspunkt betrieben wird, so dass stromaufwärts des Partikelfilters ein Abgas mit zumindest
   ∘ einem erhöhten/angehobenen Anteil von Sauerstoff oder
   ∘ einer erhöhten/angehobenen ersten Temperatur
   bereitgestellt wird; wobei, wenn während oder nach Schritt b) stromabwärts des Partikelfilters ein Anstieg einer zweiten Temperatur festgestellt wird, folgender Schritt durchgeführt wird:
c) Einleiten einer zweiten Regeneration des Partikelfilters.

Das Verfahren setzt bei einer bereits eingeleiteten ersten Regeneration eines Partikelfilters ein. Die erste Regeneration erfolgt über eine Erhöhung der Abgastemperatur und/oder über eine Bereitstellung von zusätzlichem Sauerstoff in dem Abgas stromaufwärts des Partikelfilters. Die Abgastemperatur oder der Anteil von Sauerstoff in dem Abgas kann über eine verbrennungsmotorische Maßnahme erhöht werden. Die Erhöhung der Abgastemperatur bzw. des Anteils von Sauerstoff bezieht sich auf die Abgastemperatur bzw. den Anteils von Sauerstoff, die/der sonst z. B. durch einen Fahrer vorbestimmten Betriebspunkt der Verbrennungskraftmaschine vorbestimmt wäre. So kann für das Kraftfahrzeug die (übliche) Abgastemperatur und/oder der (übliche) Anteil von Sauerstoff im Abgas zu konkreten Betriebspunkten einer Verbrennungskraftmaschine vorgegeben bzw. eingestellt sein (Kennfeld), und bei der Durchführung des hier vorgeschlagenen Verfahrens ein davon abweichender, erhöhter Wert eingestellt werden. In Schritt b) können die (verbrennungsmotorischen) Prozesse eingeleitet, durch die eine Umsetzung der ggf. noch in dem Partikelfilter vorliegenden Partikel in einem solchen Umfang erfolgt, dass ein Anstieg der zweiten Temperatur erwartet werden kann.

Die erste Regeneration wird insbesondere als Ergebnis einer Modellierung eingeleitet, also gerade nicht anhand konkreter Messungen im Abgasstrom. Der sonst eingesetzte apparative Aufwand (z. B. eine Messung des Druckabfall über den Partikelfilter zur Bestimmung der Beladung mit Partikeln) kann hier gerade entfallen. Bevorzugt ist also gerade kein Drucksensor unmittelbar (bzw. benachbart) stromauf- bzw. stromabwärts des Partikelfilters angeordnet.

Die Modellierung berücksichtigt den Verlauf eines Betriebs der Verbrennungskraftmaschine, insbesondere unter Berücksichtigung von Umgebungsbedingungen.

In dem Schritt a) wird eine erste Regeneration so lange durchgeführt, bis eine Partikelbeladung des Partikelfilters (rechnerisch) einen (vorbestimmten) unteren Grenzwert erreicht hat. Die erste Regeneration wird eingeleitet, wenn z. B. aufgrund einer Modellierung (z. B. basierend auf einer Analyse des Fahrverhaltens und/oder einer Analyse des Betriebs der Verbrennungskraftmaschine) festgestellt wurde, dass die Beladung des Partikelfilters mit Partikeln einen oberen Grenzwert erreicht hat.

Die Beladung des Partikelfilters mit Partikeln führt dazu, dass bei bestimmten Betriebspunkten der Verbrennungskraftmaschine, also auch im normalen Betrieb der Verbrennungskraftmaschine und nicht während einer bewusst eingeleiteten Regeneration, eine exotherme Umsetzung der Partikel einsetzen kann. Je nachdem, in welchen Betriebspunkten die Verbrennungskraftmaschine ab diesem Zeitpunkt betrieben wird, bzw. wie stark die Beladung mit Partikeln, auch lokal unterschiedlich, ist kann aufgrund der exothermen Umsetzung der Partikel eine (lokale) Schädigung des Partikelfilters erfolgen. Aus diesem Grund wird die Verbrennungskraftmaschine bei einer bestimmten Beladung des Partikelfilters, z. B. bei Erreichen des unteren (oder auch des oberen) Grenzwertes, nur noch in bestimmten Betriebspunkten betrieben, bzw. es wird ein Betrieb in bestimmten Betriebspunkten unterbunden.

Der untere Grenzwert beschreibt insbesondere eine Höchstmenge an Partikeln im Partikelfilter (z. B. hinsichtlich der Anzahl von Partikeln und/oder der Masse an Partikeln), die nach einer (ersten Regeneration) in des Partikelfilters angeordnet sein darf, wobei bei dieser Höchstmenge noch keine Beschränkung des Betriebs der Verbrennungskraftmaschine erfolgen muss. Sollte die Beladung des Partikelfilters den unteren Grenzwert allerdings übersteigen, könnte es bei bestimmten Betriebspunkten der Verbrennungskraftmaschine (bei Erreichen besonders hoher Temperaturen oder bei besonders magerem Betrieb - und entsprechender Bereitstellung eines hohen Sauerstoffüberschusses stromaufwärts des Partikelfilters) zu der exothermen Umsetzung dieser Partikelmenge kommen, die eine Schädigung des Partikelfilters verursachen kann.

In Schritt b) erfolgt eine sogenannte Verifikationsmessung, bei der die Verbrennungskraftmaschine (zumindest kurzzeitig) in einem vorgegebenen ersten Betriebspunkt (definiert insbesondere durch aktuelles Drehmoment und aktuelle Drehzahl - Motorkennfeld) betrieben wird. In diesem Betriebspunkt wird (z. B. verbrennungsmotorisch) ein Sauerstoffüberschuss im Abgas und/oder ein Abgas mit erhöhter erste Temperatur stromaufwärts des Partikelfilters bereitgestellt, wobei durch diese Maßnahme in dem Partikelfilter ggf. noch immer eingelagerte Partikel exotherm umgesetzt werden. Die so erzwungene Umsetzung der Partikel hat eine Erhöhung der zweiten Temperatur des Abgases stromabwärts des Partikelfilters zur Folge, die durch einen Temperatursensor erfasst werden kann.

Die "erste" Temperatur ist die Temperatur des Abgases stromaufwärts des Partikelfilters, während die "zweite" Temperatur die Temperatur des Abgases stromabwärts des Partikelfilters darstellt. Im Rahmen des Verfahrens kann eine Veränderung der zweiten Temperatur stromabwärts des Partikelfilters in Reaktion auf eine veränderte erste Temperatur oder eine Erhöhung des Sauerstoffanteils im Abgas stromaufwärts des Partikelfilters analysiert werden.

In Schritt b) wird der Anteil an Sauerstoff im Abgas im Vergleich zu einem unmittelbar vor Schritt b) vorliegenden (Regenerations- oder zweiten) Betriebspunkt erhöht, insbesondere mindestens um 10 %, bevorzugt um mindestens 20 %.

Alternativ oder zusätzlich wird in Schritt b) die erste Temperatur des Abgases im Vergleich zu einem unmittelbar vor Schritt b) vorliegenden (Regenerations- oder zweiten) Betriebspunkt erhöht, insbesondere mindestens um 5 %, bevorzugt um mindestens 10 %.

Wenn in Folge der Verifikationsmessung keine (signifikante) Erhöhung der zweiten Temperatur im Abgas gemessen wird, kann darauf geschlossen werden, dass die erste Regeneration gemäß Schritt a) ausreichend war. Insbesondere kann dann darauf geschlossen werden, dass die Modellierung der Beladung des Partikelfilters und/oder die Modellierung der ersten Regeneration ausreichend genau war.

Wird eine Erhöhung der zweiten Temperatur im Abgas festgestellt, kann darauf geschlossen werden, dass der Partikelfilter trotz der ersten Regeneration weiter mit Partikeln in einem erheblichen Umfang beladen ist. In diesem Fall könnte durch den Betrieb der Verbrennungskraftmaschine in bestimmten Betriebspunkten eine Schädigung des Partikelfilters erfolgen. Aus diesem Grund wird nun (unmittelbar) eine zweite Regeneration des Partikelfilters eingeleitet, durch die die Beladung des eben bereits regenerierten Partikelfilters mit Partikeln weiter reduziert wird.

Insbesondere wird das Verfahren nachfolgend zu Schritt c) mit Schritt b) fortgesetzt. Das Verfahren kann so lange bzw. so oft wiederholt durchgeführt werden, bis nach Schritt b) keine Erhöhung der zweiten Temperatur mehr festgestellt wird.

Bevorzugt wird in Schritt b) die Verbrennungskraftmaschine in dem ersten Betriebspunkt ohne Einspritzung von Kraftstoff betrieben. Dieser erste Betriebspunkt bezeichnet damit eine sogenannte Schubphase, in der die Verbrennungskraftmaschine durch die Bewegung des Kraftfahrzeugs geschleppt, also in Drehbewegung gehalten wird.

Zwischen den Schritten a) und b) kann die Verbrennungskraftmaschine in einem durch einen Nutzer frei wählbaren zweiten Betriebspunkt betrieben werden, wobei Schritt b) mit einem zeitlichen Abstand zum Ende der ersten Regeneration gemäß Schritt a) eingeleitet wird.

Der zeitliche Abstand beträgt mindestens eine (1) Sekunde, bevorzugt höchstens fünf (5) Sekunden.

Bevorzugt wird die erste Regeneration gemäß Schritt a) ausschließlich anhand eines Rechenmodells (also modelliert) eingeleitet und z. B. durch verbrennungsmotorische Maßnahmen durchgeführt. Insbesondere werden keine Messergebnisse aus der Abgasleitung ermittelt und zur Einleitung, Überwachung und/oder Anpassung der ersten Regeneration verwendet.

Insbesondere wird zumindest während der Schritte a) und c) die Verbrennungskraftmaschine so betrieben, dass der Anteil von Sauerstoff im Abgas und/oder die erste Temperatur des Abgases (unmittelbar) stromaufwärts des Partikelfilters begrenzt wird. Die Begrenzung soll insbesondere sicherstellen, dass eine thermische Überlastung und damit Schädigung des Partikelfilters nicht eintritt. Dabei soll die (erste/zweite) Regeneration möglichst vollständig erfolgen, so dass hinsichtlich der Partikelbeladung jedenfalls ein (vorbestimmter) unterer Grenzwert erreicht wird. Gemäß einer weiteren bevorzugten Ausgestaltung ist (unmittelbar) stromabwärts des Partikelfilters (oder am stromabwärtigen Ende des Partikelfilters) mindestens ein Temperatursensor zur Messung einer zweiten Temperatur des Abgases angeordnet, wobei die Verbrennungskraftmaschine zumindest während Schritt b) so betrieben wird, dass stromaufwärts des Partikelfilters zumindest
∘ ein erhöhter/angehobener Anteil von Sauerstoff im Abgas oder
∘ eine erste Temperatur des Abgases
in Abhängigkeit von der gemessenen zweiten Temperatur eingestellt wird.

Während der Änderung des erhöhten Anteils von Sauerstoff und/oder der Erhöhung der ersten Temperatur des Abgases stromaufwärts des Partikelfilters wird die zweite Temperatur stromabwärts des Partikelfilters ermittelt. Eine mögliche Schädigung des Partikelfilters, die aufgrund einer gemessenen, zu starken Erhöhung der zweiten Temperatur erwartet werden kann, kann dadurch verhindert werden, dass die erste Temperatur bzw. der Anteil von Sauerstoff im Abgas stromaufwärts des Partikelfilters dann wieder gesenkt werden.

Die erste und/oder zweite Regeneration wird insbesondere in einem (ggf. voneinander unterschiedlichem) bestimmten Regenerations-Betriebspunkt der Verbrennungskraftmaschine durchgeführt. Dieser Regenerations-Betriebspunkt wird insbesondere ausschließlich während der Regeneration (und ggf. bei der Verifikationsmessung) durchgeführt.

Es wird weiter ein Kraftfahrzeug nach Anspruch 9 vorgeschlagen, zumindest umfassend eine Verbrennungskraftmaschine und eine Abgasanlage, wobei in der Abgasanlage ein Partikelfilter und stromabwärts des Partikelfilters mindestens ein Temperatursensor zur Messung einer zweiten Temperatur des Abgases angeordnet ist, wobei das Kraftfahrzeug ein Steuergerät zum Betreiben der Verbrennungskraftmaschine aufweist, wobei das Steuergerät zur Durchführung des vorgeschlagenen Verfahrens geeignet ausgeführt ist, so dass stromaufwärts des Partikelfilters zumindest eines von
∘ ein erhöhter Anteil von Sauerstoff im Abgas oder
∘ eine erste Temperatur des Abgases
durch das Steuergerät in Abhängigkeit von der gemessenen zweiten Temperatur einstellbar ist.

Die Ausführungen zu dem Verfahren sind auf das Kraftfahrzeug übertragbar und umgekehrt.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen bezeichnen gleiche Gegenstände. Es zeigen:
- Fig. 1:: ein Kraftfahrzeug mit einer Abgasanlage;
- Fig. 2:: ein erstes Temperatur/Sauerstoff/Partikelbeladung/Zeit-Diagramm; und
- Fig. 3:: ein zweites Temperatur/Sauerstoff/Partikelbeladung/Zeit-Diagramm.

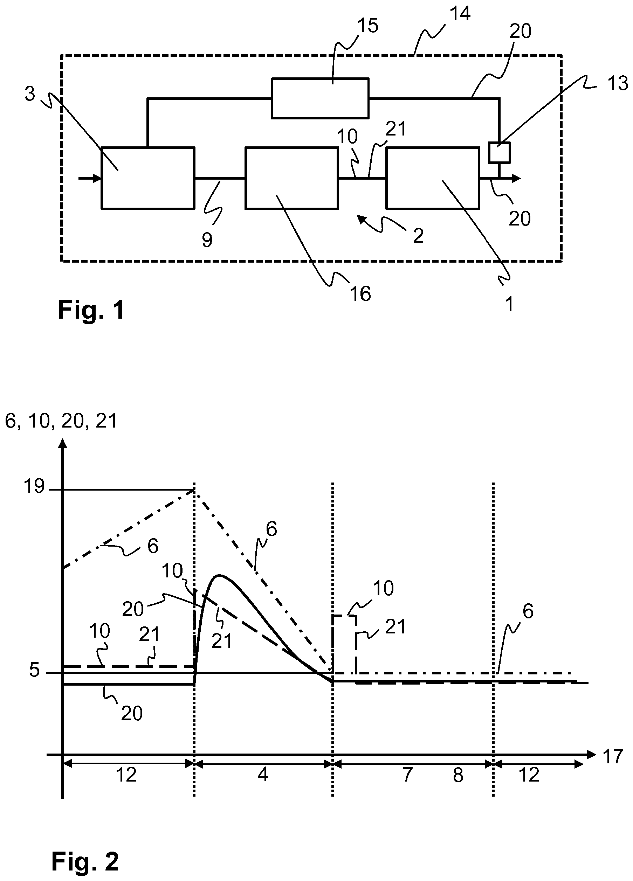

Die Figur 1 zeigt ein Kraftfahrzeug 14 mit einer Abgasanlage 2. Das Kraftfahrzeug 14 umfasst eine Verbrennungskraftmaschine 3 und eine Abgasanlage 2, wobei in der Abgasanlage 2, entlang der Strömungsrichtung des Abgases 9 zunächst ein Katalysator 16 und dann ein Partikelfilter 1 und stromabwärts des Partikelfilters 1 ein Temperatursensor 13 zur Messung einer zweiten Temperatur 20 des Abgases 9 angeordnet sind. Das Kraftfahrzeug 14 weist ein Steuergerät 15 zum Betreiben der Verbrennungskraftmaschine 3 auf, wobei das Steuergerät 15, in Abhängigkeit von der stromabwärts des Partikelfilters 1 gemessenen ersten Temperatur 10, stromaufwärts des Partikelfilters 1 einen erhöhten Anteil von Sauerstoff 21 im Abgas 9 einstellt und/oder ein Abgas 9 mit erhöhter erster Temperatur 10 bereitstellt. Das Steuergerät 15 modelliert auch die erste und zweite Regeneration des Partikelfilters 1, wobei die Verbrennungskraftmaschine 3 in entsprechenden, bestimmten Betriebspunkten dann betrieben wird.

Fig. 2 zeigt ein erstes Diagramm, in dem ein exemplarischer Verlauf der Temperatur, des Sauerstoffs, der Partikelbeladung über die Zeit veranschaulicht ist. Auf der vertikalen Achse sind die erste Temperatur 10, zweite Temperatur 20, Sauerstoff 21 und Partikelbeladung 6 des Partikelfilters 1 aufgetragen. Auf der horizontalen Achse ist die Zeit 17 aufgetragen.

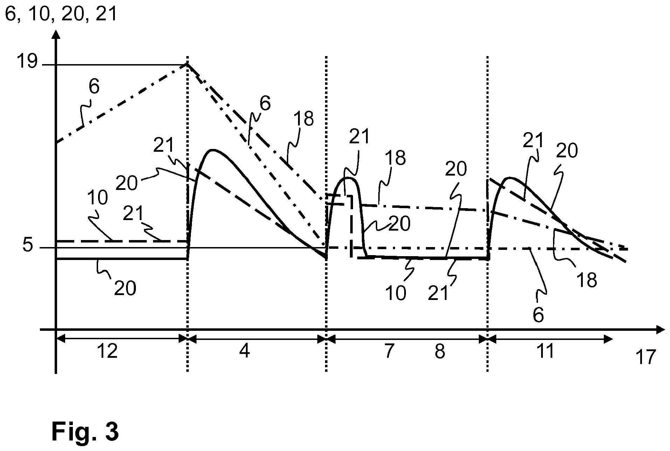

Zu einem hier dargestellten Zeitpunkt Null (Ursprung des gezeigten Diagramms) steigt eine Partikelbeladung 6 mit der Zeit 17 an. Während dieser Zeit 17 wird die Verbrennungskraftmaschine 3 in einem (ggf. bereits eingeschränkt auswählbaren) zweiten Betriebspunkt 12 betrieben, wobei die zweite Temperatur 20 des Abgases 9 stromabwärts der Partikelfalle 1 hier im Wesentlichen konstant ist. Mit Erreichen eines oberen Grenzwertes 19 wird eine erste Regeneration 4 des Partikelfilters 1 eingeleitet. Die erste Regeneration 4 erfolgt über eine Erhöhung der ersten Temperatur 10 des Abgases 9 und/oder über eine (motorische und/oder über einen Einlass im Abgassystem vorzunehmende) Bereitstellung von zusätzlichem Sauerstoff 21 in dem Abgas 9 stromaufwärts des Partikelfilters 1. Der Verlauf der ersten Temperatur 10 und der Anteil an Sauerstoff 21 im Abgas 9 ist in Fig. 2 und Fig. 3 jeweils in einer gemeinsamen Kurve dargestellt.

In dem Schritt a) des Verfahrens wird eine erste Regeneration 4 so lange durchgeführt, bis eine Partikelbeladung 6 des Partikelfilters 1 (rechnerisch) einen unteren Grenzwert 5 erreicht hat. Der untere Grenzwert 5 beschreibt eine Obergrenze einer Partikelbeladung 6, die nach der ersten Regeneration 4 in dem Partikelfilter 1 angeordnet sein darf.

In Schritt b) erfolgt eine Verifikationsmessung 7, bei der die Verbrennungskraftmaschine 3 für eine kurze Zeit 17 in einem bestimmten ersten Betriebspunkt 8 betrieben wird. In diesem ersten Betriebspunkt 8 wird eine deutlich erhöhte Menge an Sauerstoff 21 im Abgas 9 stromaufwärts des Partikelfilters 1 bereitgestellt, durch den in dem Partikelfilter 1 ggf. noch immer eingelagerte Partikel exotherm umgesetzt werden würden. Die so erzwungene Umsetzung der Partikel hätte eine Erhöhung der zweiten Temperatur 20 des Abgases 9 stromabwärts des Partikelfilters 1 zur Folge, die durch einen Temperatursensor 13 erfasst werden kann.

Hier wird in Folge der Verifikationsmessung 7 keine (signifikante) Erhöhung der zweiten Temperatur 20 im Abgas 9 gemessen. Es wird daher darauf geschlossen, dass die erste Regeneration 4 gemäß Schritt a) ausreichend war. Insbesondere wird darauf geschlossen, dass die Modellierung der Partikelbeladung 6 des Partikelfilters 1 und/oder die Modellierung der ersten Regeneration 4 ausreichend genau war.

Im Anschluss an die Verifikationsmessung 7 wird die Verbrennungskraftmaschine 3 in einem beliebigen zweiten Betriebspunkt 12 betrieben.

Fig. 3 zeigt beispielhaft ein zweites Diagramm mit abweichenden Verläufen. Im Unterschied zu Fig. 2 wird hier bei der Verifikationsmessung 7 eine Erhöhung der zweiten Temperatur 20 im Abgas 9 festgestellt. Es wird also darauf geschlossen, dass der Partikelfilter 1 trotz der ersten Regeneration 4 weiter mit Partikeln beladen ist. Die tatsächlich vorliegende, reale Partikelbeladung 18 ist also höher als die (modellierte, also rechnerisch ermittelte) Partikelbeladung 6. Es wird daher in einem Schritt c) des Verfahrens eine zweite Regeneration 11 des Partikelfilters 1 eingeleitet, durch die die Partikelbeladung 6 des Partikelfilters 1 weiter reduziert wird.

Die zweite Regeneration 11 wird im Wesentlichen entsprechend der ersten Regeneration 4 durchgeführt. Es wird also zumindest kurzzeitig eine erste Temperatur 10 des Abgases 9 oder ein Anteil an Sauerstoff 21 stromaufwärts des Partikelfilters 1 erhöht, so dass die Partikelbeladung 6 des Partikelfilters 1 reduziert wird.

### BEZUGSZEICHENLISTE

- 1: Partikelfilter
- 2: Abgasanlage
- 3: Verbrennungskraftmaschine
- 4: erste Regeneration
- 5: unterer Grenzwert
- 6: Partikelbeladung
- 7: Verifikationsmessung
- 8: erster Betriebspunkt
- 9: Abgas
- 10: erste Temperatur
- 11: zweite Regeneration
- 12: zweiter Betriebspunkt
- 13: Temperatursensor
- 14: Kraftfahrzeug
- 15: Steuergerät
- 16: Katalysator
- 17: Zeit
- 18: reale Partikelbeladung
- 19: oberer Grenzwert
- 20: zweite Temperatur
- 21: Sauerstoff

## Patentansprüche

1. Verfahren zur Regeneration eines Partikelfilters (1), der in einer Abgasanlage (2) einer Verbrennungskraftmaschine (3) angeordnet ist, umfassend zumindest die folgenden Schritte:
a) Durchführen einer ersten Regeneration (4) des Partikelfilters (1) bis zum Erreichen eines unteren Grenzwertes (5) einer Partikelbeladung (6) des Partikelfilters (1);
b) Durchführen einer Verifikationsmessung (7), wobei die Verbrennungskraftmaschine (3) in einem ersten Betriebspunkt (8) betrieben wird, so dass stromaufwärts des Partikelfilters (1) ein Abgas (9) mit zumindest
∘ einem Sauerstoffüberschuss oder
∘ einer erhöhten ersten Temperatur (10)
bereitgestellt wird;
wobei, wenn während oder nach Schritt b) stromabwärts des Partikelfilters (1) ein Anstieg einer zweiten Temperatur (20) des Abgases (9) festgestellt wird, folgender Schritt durchgeführt wird:
c) Einleiten einer zweiten Regeneration (11) des Partikelfilters (1).

2. Verfahren nach Patentanspruch 1, wobei in Schritt b) die Verbrennungskraftmaschine (3) in dem ersten Betriebspunkt (8) ohne Einspritzung von Kraftstoff betrieben wird.

3. Verfahren nach einem der vorhergehenden Patentansprüche, wobei zwischen den Schritten a) und b) die Verbrennungskraftmaschine (3) in einem durch einen Nutzer frei wählbaren zweiten Betriebspunkt (12) betrieben wird, wobei Schritt b) mit einem zeitlichen Abstand zum Ende der ersten Regeneration (4) gemäß Schritt a) eingeleitet wird.

4. Verfahren nach Patentanspruch 3, wobei der zeitliche Abstand mindestens eine Sekunde beträgt.

5. Verfahren nach einem der Patentansprüche 3 oder 4, wobei der zeitliche Abstand höchstens fünf Sekunden beträgt.

6. Verfahren nach einem der vorhergehenden Patentansprüche, wobei die erste Regeneration (4) gemäß Schritt a) ausschließlich anhand eines Rechenmodells durchgeführt wird.

7. Verfahren nach einem der vorhergehenden Patentansprüche, wobei zumindest während der Schritte a) und c) die Verbrennungskraftmaschine (3) so betrieben wird, dass stromaufwärts des Partikelfilters (1) zumindest
∘ der Sauerstoffüberschuss im Abgas (9) oder
∘ eine erste Temperatur (10) des Abgases (9)
begrenzt wird.

8. Verfahren nach einem der vorhergehenden Patentansprüche, wobei stromabwärts des Partikelfilters (1) mindestens ein Temperatursensor (13) zur Messung einer zweiten Temperatur (20) des Abgases (9) angeordnet ist, wobei die Verbrennungskraftmaschine (3) zumindest während Schritt b) so betrieben wird, dass stromaufwärts des Partikelfilters (1) zumindest
∘ ein Sauerstoffüberschuss im Abgas (9) oder
∘ eine erste Temperatur (10) des Abgases (9)
in Abhängigkeit von der gemessenen zweiten Temperatur (20) eingestellt wird.

9. Kraftfahrzeug (14), zumindest umfassend eine Verbrennungskraftmaschine (3) und eine Abgasanlage (2), wobei in der Abgasanlage (2) ein Partikelfilter (1) und stromabwärts des Partikelfilters (1) mindestens ein Temperatursensor (13) angeordnet ist, wobei das Kraftfahrzeug (14) ein Steuergerät (15) zum Betreiben der Verbrennungskraftmaschine (3) aufweist, wobei das Steuergerät (15) zur Durchführung des Verfahrens nach einem der vorhergehenden Patentansprüche geeignet ausgestattet ist, so dass stromaufwärts des Partikelfilters (1) zumindest
∘ ein Sauerstoffüberschuss im Abgas (9) oder
∘ eine erste Temperatur (10) des Abgases (9)
durch das Steuergerät (15) in Abhängigkeit von der gemessenen zweiten Temperatur (20) einstellbar ist.

## Claims

1. A method for regenerating a particle filter (1), which is arranged in an exhaust system (2) of an internal combustion engine (3), comprising at least the following steps:
a) performing a first regeneration (4) of the particle filter (1) up to reaching a lower limit value (5) of a particle load (6) of the particle filter (1);
b) performing a verification measurement (7), wherein the internal combustion engine (3) is operated at a first operating point (8), so that upstream of the particle filter (1) an exhaust gas (9) with at least
∘ an excess of oxygen or
∘ an increased first temperature (10)
is provided;
wherein, if during or after step b), an increase in a second temperature (20) of the exhaust gas (9) is detected downstream of the particle filter (1), the following step is carried out:
c) initiation of a second regeneration (11) of the particle filter (1).

2. The method according to claim 1, wherein in step b) the internal combustion engine (3) is operated in the first operating point (8) without injection of fuel.

3. Method according to one of the preceding claims, wherein between steps a) and b) the internal combustion engine (3) is operated at a second operating point (12) freely selectable by a user, wherein step b) is initiated at a time interval from the end of the first regeneration (4) according to step a).

4. Method according to claim 3, wherein the time interval is at least one second.

5. Method according to one of claims 3 or 4, wherein the time interval being at most five seconds.

6. Method according to one of the preceding claims, wherein the first regeneration (4) according to step a) is carried out exclusively on the basis of a computational model.

7. Method according to one of the preceding claims, wherein at least during steps a) and c) the internal combustion engine (3) is operated so that upstream of the particle filter (1) at least
∘ the excess of oxygen in the exhaust gas (9) or
∘ a first temperature (10) of the exhaust gas (9)
is limited.

8. Method according to one of the preceding claims, wherein at least one temperature sensor (13) for measuring a second temperature (20) of the exhaust gas (9) is arranged downstream of the particle filter (1), wherein the internal combustion engine (3) is operated at least during step b) such that upstream of the particle filter (1) at least
∘ an excess of oxygen in the exhaust gas (9) or
∘ a first temperature (10) of the exhaust gas (9)
is set as a function of the measured second temperature (20).

9. Motor vehicle (14), at least comprising an internal combustion engine (3) and an exhaust system (2), wherein a particle filter (1) is arranged in the exhaust system (2) and at least one temperature sensor (13) is arranged downstream of the particle filter (1), wherein the motor vehicle (14) has a control unit (15) for operating the internal combustion engine (3), wherein the control unit (15) is suitably equipped for carrying out the method according to one of the preceding claims, so that upstream of the particle filter (1) at least
∘ an excess of oxygen in the exhaust gas (9) or
∘ a first temperature (10) of the exhaust gas (9) can be set by the control device (15) as a function of the measured second temperature (20).

## Revendications

1. Procédé de régénération d'un filtre à particules (1) qui est disposé dans un système d'échappement (2) d'un moteur à combustion interne (3), le procédé comprenant au moins les étapes suivantes :
a) effectuer une première régénération (4) du filtre à particules (1) jusqu'à ce qu'une valeur limite inférieure (5) d'une charge de particules (6) du filtre à particules (1) soit atteinte ;
b) effectuer une mesure de vérification (7), le moteur à combustion interne (3) fonctionnant à un premier point de fonctionnement (8) de sorte qu'en amont du filtre à particules (1) un gaz d'échappement (9) présente au moins
∘ un excès d'oxygène ou
∘ une première température élevée (10) ;
si, pendant ou après l'étape b), une augmentation d'une deuxième température (20) des gaz d'échappement (9) est déterminée en aval du filtre à particules (1), l'étape suivante étant réalisée :
c) lancer une deuxième régénération (11) du filtre à particules (1).

2. Procédé selon la revendication 1, à l'étape b) le moteur à combustion interne (3) fonctionnant au premier point de fonctionnement (8) sans injection de carburant.

3. Procédé selon l'une des revendications précédentes, entre les étapes a) et b) le moteur à combustion interne (3) fonctionnant à un deuxième point de fonctionnement (12) librement sélectionnable par un utilisateur, l'étape b) étant lancée à un intervalle de temps par rapport à la fin de la première régénération (4) selon l'étape a).

4. Procédé selon la revendication 3, l'intervalle de temps étant d'au moins une seconde.

5. Procédé selon l'une des revendications 3 ou 4, l'intervalle de temps étant au maximum de cinq secondes.

6. Procédé selon l'une des revendications précédentes, la première régénération (4) selon l'étape a) étant réalisée exclusivement sur la base d'un modèle de calcul.

7. Procédé selon l'une des revendications précédentes, au moins lors des étapes a) et c) le moteur à combustion interne (3) fonctionnant de façon à limiter en amont du filtre à particules (1) au moins
∘ l'excès d'oxygène dans les gaz d'échappement (9) ou
∘ une première température (10) des gaz d'échappement (9).

8. Procédé selon l'une des revendications précédentes, au moins un capteur de température (13) destiné à mesurer une deuxième température (20) des gaz d'échappement (9) étant disposé en aval du filtre à particules (1), le moteur à combustion interne (3) fonctionnant au moins à l'étape b) de façon à régler en amont du filtre à particules (1) au moins
∘ un excès d'oxygène dans les gaz d'échappement (9) ou
∘ une première température (10) des gaz d'échappement (9) en fonction de la deuxième température mesurée (20).

9. Véhicule automobile (14), comprenant au moins un moteur à combustion interne (3) et un système de gaz d'échappement (2), un filtre à particules (1) étant disposé dans le système de gaz d'échappement (2) et au moins un capteur de température (13) étant disposé en aval du filtre à particules (1), le véhicule automobile (14) comportant une unité de commande (15) destinée à faire fonctionner le moteur à combustion interne (3), l'unité de commande (15) étant équipée de manière appropriée pour mettre en œuvre le procédé selon l'une des revendications précédentes de sorte qu'en amont du filtre à particules (1) au moins
∘ un excès d'oxygène dans les gaz d'échappement (9) ou
∘ une première température (10) des gaz d'échappement (9) puisse être réglé(e) par le dispositif de commande (15) en fonction de la deuxième température mesurée (20).
